# EUROPEAN PATENT APPLICATION

(11) **EP 2 818 284 A1**
(43) Date of publication of application: **31.12.2014**
(21) Application number: 14170919.6
(22) Date of filing: 03.06.2014
(51) Int. Cl.: B25J 15/00, B25J 19/00

(54) **Robot, method for producing robot, and tool covering**

(30) Priority: 24.06.2013 JP 2013131532
(71) Applicant: Kabushiki Kaisha Yaskawa Denki, Kitakyushu-shi, Fukuoka 806-0004 (JP)
(72) Inventor: Umeno, Makoto, Fukuoka 806-0004 (JP)
(74) Representative: Viering, Jentschura & Partner Patent- und Rechtsanwälte

(57) **Abstract**

A robot (10) includes a robot arm (13R, 13L), a robot hand (14), and a covering (144). The robot hand (14) is disposed on the robot arm (13R, 13L). The covering (144) covers at least a part of the robot hand (14).

## Description

### BACKGROUND

### FIELD OF THE INVENTION

The present invention relates to a robot, a method for producing the robot, and a covering.

### DISCUSSION OF THE BACKGROUND

Japanese Unexamined Patent Application Publication No. 2012-117878 discloses robot system with robot hands perform specimen processing with respect to specimens such as blood, spinal fluid, urine, and parts of tissue, and the specimen processing includes injection of reagent, agitation, and separation.

Such robots have, for example, parallely openable-closable holding claws on the robot hand to enable the robots to perform operations such as: transferring a dish, a test tube, or another container containing a specimen while the holding claws are holding the dish, the test tube, or another container; and injecting reagent into the dish, the test tube, or another container while the holding claws are holding a pipette.

Incidentally, the parallely openable-closable holding claws are each provided with a slit within a movable range. There is a possibility of leakage of dust from the inside of the robot hand to the outside through the slit, or a possibility of intrusion of external dust into the robot hand through the slit.

In view of this, for robots of which cleanliness performance is particularly required, such a method has been proposed as to set the air pressure within the robot hand at negative pressure to prevent a leakage of dust within the robot hand to the outside.

For robots of which dust-proof and drip-proof performance is particularly required, such a method has been proposed as to set the air pressure within the robot hand at positive pressure to prevent intrusion of external dust and droplets into the robot hand.

The contents of Japanese Unexamined Patent Application Publication No. 2012-117878 are incorporated herein by reference in their entirety.

Unfortunately, the above-described conventional technique utilizing air pressure has had such a problem that it is difficult to realize cleanliness performance and dust-proof and drip-proof performance at the same time.

The present disclosure has been made in view of the above-described circumstances, and it is an object of the present invention to provide a robot, a method for producing the robot, and a covering that realize cleanliness performance and dust-proof and drip-proof performance at the same time.

### SUMMARY

According to one aspect of the present disclosure, a robot 10 includes a robot arm 13R, 13L, a robot hand 14, and a covering 144. The robot hand 14 is disposed on the robot arm 13R, 13L. The covering 144 covers at least a part of the robot hand 14.

The one aspect of the present disclosure realizes cleanliness performance and dust-proof and drip-proof performance at the same time.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic plan view of a configuration of a robot system including a robot according to an embodiment;
FIG. 2A is a schematic front view of a configuration of the robot;
FIG. 2B is a schematic plan view of a configuration of the robot;
FIG. 3A is a schematic perspective view of a configuration of a hand;
FIG. 3B is a schematic front view of a configuration of the hand;
FIG. 3C is a schematic plan view of a configuration of the hand;
FIG. 3D is a schematic bottom view of a configuration of the hand;
FIG. 4A is a schematic perspective view (Part 1) of the hand with a glove on;
FIG. 4B is another schematic perspective view (Part 2) of the hand with the glove on;
FIG. 4C is a schematic plan view of the hand with the glove on; and
FIG. 4D is a schematic front view of the hand with the glove on.

### DESCRIPTION OF THE EMBODIMENTS

A robot, a method for producing the robot, and a covering according to an embodiment of the present application will be described in detail below by referring to the accompanying drawings. The following embodiment is provided for exemplary purposes only and is not intended to limit the present disclosure.

The following description will take as an example a robot that performs specimen processing in the biomedical field. The "robot hand", which is an end effector, of the robot will be referred to as "hand". The robot arm will be referred to as "arm".

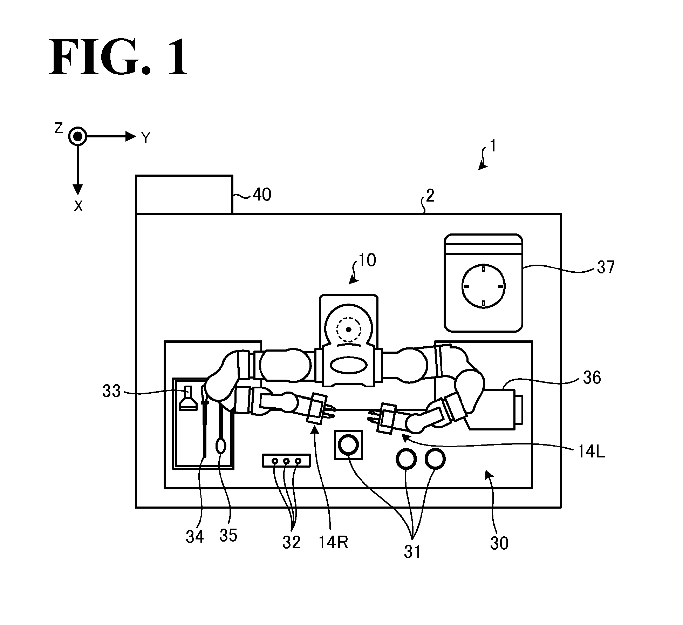

FIG. 1 is a schematic plan view of a configuration of a robot system 1 including a robot 10 according to this embodiment. For the ease of description, FIG. 1 illustrates a three-dimensional orthogonal coordinate system including a Z axis with its vertically upward direction being assumed the positive direction. This orthogonal coordinate system may also be illustrated in some other drawings referred to in the following description.

As shown in FIG. 1, the robot system 1 includes a safety cabinet 2, which has rectangular parallelepiped inner space. In the safety cabinet 2, the robot system 1 includes a robot 10, a work table 20, and various types of processing equipment 30.

While in this embodiment the robot 10 is disposed in the safety cabinet 2, it is also possible, depending on the work content, to use some other working housing, instead of the safety cabinet 2, that is suitable for the purpose of use, such as a draft chamber and a clean bench. It is also possible to arrange the robot 10 outside the safety cabinet 2 or another housing and to move the hand into the safety cabinet 2 through a front window or another window of the safety cabinet 2 so as to perform an operation.

Examples of the various types of processing equipment 30 include a dish 31, a test tube 32, a spatula 33, a pipette 34, a spoon 35, an agitator 36, and a centrifuge 37, as shown in FIG. 1.

Also, the robot system 1 includes a control device 40 outside the safety cabinet 2. The control device 40 is coupled in an information transmittable manner to the various devices disposed in the safety cabinet 2 such as the robot 10. It is noted that any form of connection, wired or wireless, may be employed.

Here, the control device 40 is a controller to control the operation of each device coupled to the control device 40, and includes various control-related devices, a processing unit, and a storage device. It is noted that the control device 40 may be disposed in the safety cabinet 2.

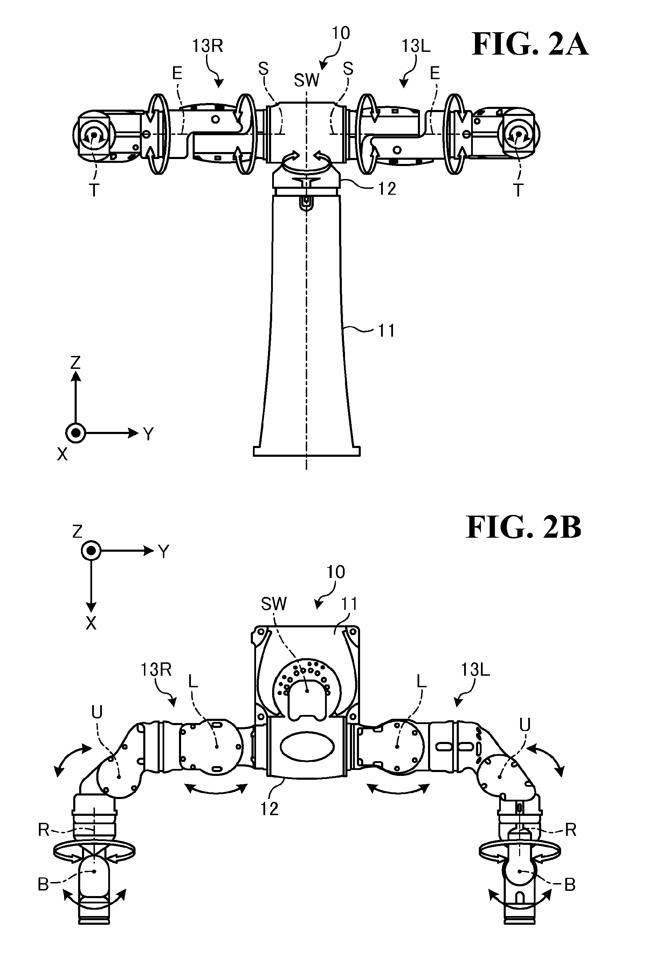

The robot 10 is a two-armed manipulator capable of operating in response to an operation instruction from the control device 40. The robot 10 includes a right arm with a right hand 14R and a left arm with a left hand 14L. A configuration of the robot 10 including the right hand 14R and the left hand 14L will be described in detail later by referring to FIG. 2A and later drawings.

The work table 20 is work space where the robot 10 performs specimen processing using the processing equipment 30. For example, the robot 10 at the work table 20 performs an operation of injecting reagent into the test tube 32 using the pipette 34 on the right hand 14R while holding the test tube 32 on the left hand 14L.

This kind of operation performed by the robot 10 is based on a "job", which is a particular program to cause the robot 10 to operate. The "job" is registered in advance in the control device 40 or another device through an input device (such as a programming pendant), not shown.

The control device 40 generates an operation signal to cause the robot 10 to operate based on the "job" and transmits the operation signal to the robot 10. The operation signal is generated in the form of a pulse signal to be transmitted to a servo motor mounted in each of joints of the robot 10.

Next, an exemplary configuration of the robot 10 will be described by referring to FIGs. 2A and 2B. FIG. 2A is a schematic front view of a configuration of the robot 10.

FIG. 2B is a schematic plan view of a configuration of the robot 10.

As shown in FIG. 2A, the robot 10 is a two-armed multi-axis robot. Specifically, the robot 10 includes a base 11, a body 12, a left arm 13L, and a right arm 13R.

The base 11 is secured to a floor or another surface that is within the safety cabinet 2 (see FIG. 1). The base 11 supports the body 12 in such a manner that the body 12 is rotatable about an axis SW at the distal end portion of the base 11 (as indicated by the double-headed arrow around the axis SW in FIG. 2A).

The body 12 is supported by the base 11 at the base end portion of the body 12. The body 12 supports the base end portion of the right arm 13R at the right shoulder of the body 12 in a manner turnable about an axis S. Similarly, the body 12 supports the base end portion of the left arm 13L at the left shoulder of the body 12 in a manner turnable about the axis S (as indicated by the double-headed arrows around the axis S).

Each of the left arm 13L and the right arm 13R includes a plurality of links and joints. Each of the left arm 13L and the right arm 13R is turnable about the axis S, an axis E, and an axis T (as indicated by the double-headed arrows around the axis S, the axis E, and the axis T in FIG. 2A) at each of the joints, which are arranged from the base end portion to the distal end portion of the respective arms.

As shown in FIG. 2B, each of the left arm 13L and the right arm 13R is capable of turning about an axis L, an axis U, an axis R, and an axis B (as indicated by the double-headed arrows around each of the axis L, the axis U, the axis R, and the axis B in FIG. 2B). Specifically, the robot 10 has seven axes per arm.

Thus, the robot 10 is capable of performing a variety of multi-axis operations utilizing a combination of the two seven-axis arms with the rotation about the axis SW based on the operation instruction from the control device 40.

Packing or a similar material is applied over each joint of the left arm 13L, the right arm 13R, and the body 12 around the corresponding axis. Thus, a drip-proof structure is established to ensure inside-outside isolation at the left arm 13L, the right arm 13R, and the body 12. This allows the robot 10 to be washed from the outside.

The right hand 14R is mounted to the distal end portion about the axis T of the right arm 13R, and the left hand 14L is mounted to the distal end portion about the axis T of the left arm 13L.

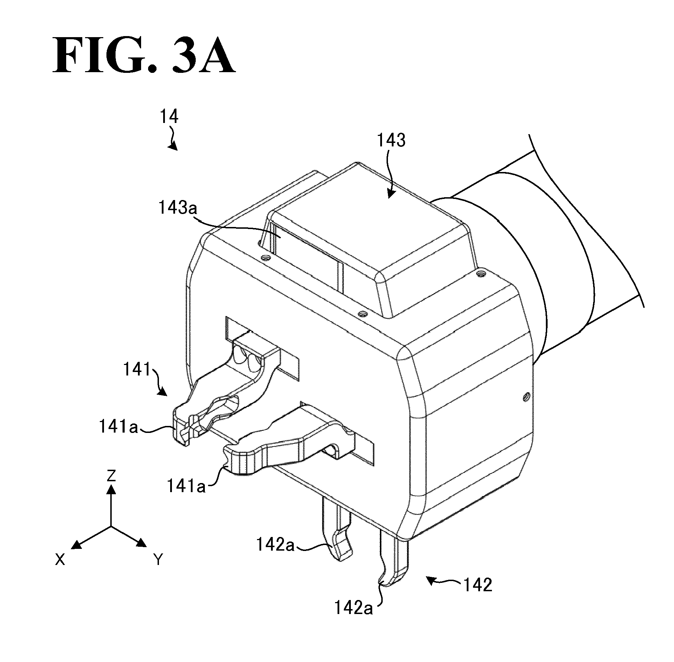

Next, an exemplary configuration of the right hand 14R and the left hand 14L will be described by referring to FIGs. 3A to 3D. In the following description, it will be assumed that the right hand 14R and the left hand 14L have the same configuration, and the right hand 14R and the left hand 14L will be collectively referred to as "hand 14".

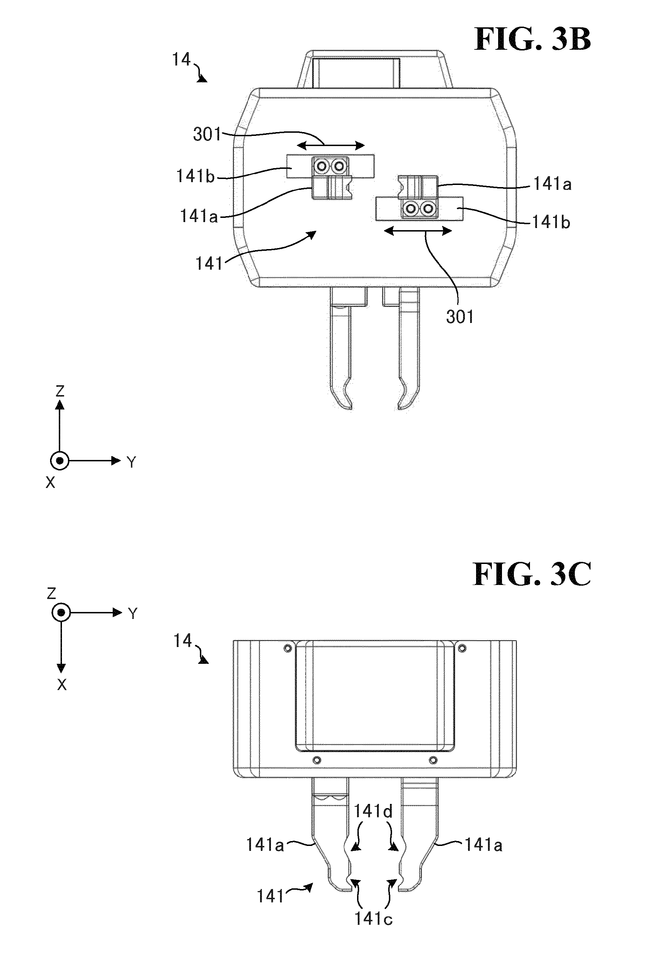

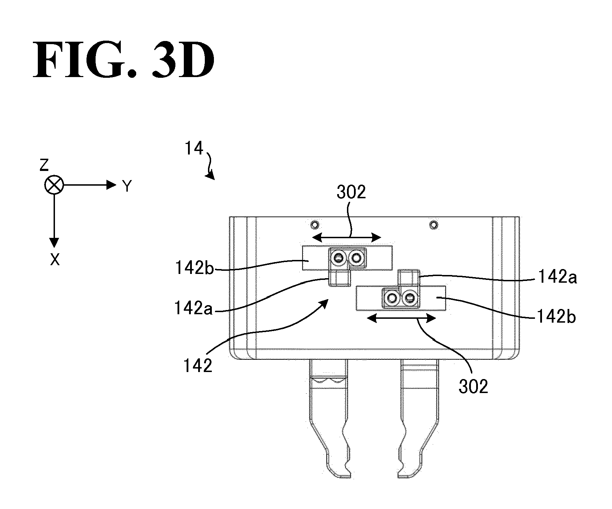

FIG. 3A is a schematic perspective view of a configuration of the hand 14. FIG. 3B is a schematic front view of the configuration of the hand 14. FIG. 3C is a schematic plan view of a configuration of the hand 14. FIG. 3D is a schematic bottom view of a configuration of the hand 14. In the drawings referred to in the following description, including FIGs. 3A to 3D, for the sake of simple description, it will be assumed that the hand 14 is oriented in the direction shown in FIG. 3A in the above-described orthogonal coordinate system.

As shown in FIG. 3A, the hand 14 includes a first holder 141, a second holder 142, and an optical sensor 143.

The first holder 141 includes a pair of holding claws 141a having distal end portions oriented in the positive direction of the X axis. The second holder 142 includes a pair of holding claws 142a having distal end portions oriented in the negative direction of the Z axis.

The optical sensor 143 is a detection device to detect, for example, a shape of a to-be-held object and a distance to the to-be-held object. The optical sensor 143 includes a light receiving-emitting device 143a.

As shown in FIG. 3B, the first holder 141 includes a pair of slits 141b, which serve as movable ranges of the holding claws 141a. The slits 141b are formed in parallel with each other in the Y axis direction in FIG. 3B to allow the holding claws 141a to slide in a direction in which the holding claws 141a approach each other or in a direction in which the holding claws 141a move apart from each other (as indicated by the double-headed arrows 301 in FIG. 3B).

In other words, the holding claws 141a are parallely openable and closable. The first holder 141 holds the to-be-held object by sandwiching the to-be-held object between the holding claws 141a.

As shown in FIG. 3C, a first notch 141c and a second notch 141d are formed on the holding surface of each of the holding claws 141a. The first notch 141c and the second notch 141d are formed to agree with shapes of different types of to-be-held objects such as test tubes 32 of different diameters.

This makes the single pair of holding claws 141a adequate to hold a plurality of different types of to-be-held objects. That is, it is not necessary to exchange the holding claws 141a every time the holding claws 141a hold a different type among the processing equipment 30, which is used in the specimen processing. This ensures efficient progress of the specimen processing.

The processing equipment 30 used in the specimen processing frequently includes fragile materials such as the test tube 32. In order to avoid unnecessary damage or similar occurrences, the first notches 141c and the second notches 141d are preferably formed in a curved shape.

The second holder 142 is configured similarly to the above-described first holder 141. Specifically, as shown in FIG. 3D, the second holder 142 includes a pair of slits 142b, which serve as movable ranges of the holding claws 142a.

The slits 142b are formed in parallel with each other in the Y axis direction in FIG. 3D to allow the holding claws 142a to slide in a direction in which the holding claws 142a approach each other or in a direction in which the holding claws 142a move apart from each other (as indicated by the double-headed arrows 302 in FIG. 3D).

Specifically, the holding claws 142a are also parallely openable and closable. The second holder 142 holds a to-be-held object by sandwiching the to-be-held object between the holding claws 142a.

As shown in FIGs. 3A to 3D, the distal end portions of the holding claws 141a are oriented in a direction different from the direction in which the distal end portions of the holding claws 142a are oriented. This eliminates the need for exchanging the hand 14 every time the hand 14 holds a different type among the processing equipment 30. This advantageously ensures efficient progress of the specimen processing.

Additionally, in the exemplary configuration shown in FIGs. 3A to 3D, it is only necessary to change the orientation of the hand 14 by 90 degrees in switching between the holding claws 141a and the holding claws 142a with respect to the to-be-held object. That is, the specimen processing proceeds with simple control of the robot 10 with respect to the various types of processing equipment 30, instead of a complex movement of the robot 10.

Incidentally, since the hand 14 includes the slits 141b and the slits 142b as described above, it is possible for dust to leak from the inside to the outside of the hand 14 through the slits 141b and the slits 142b or, contrarily, it is possible for external dust to intrude into the inside of the hand 14 through the slits 141b and the slits 142b.

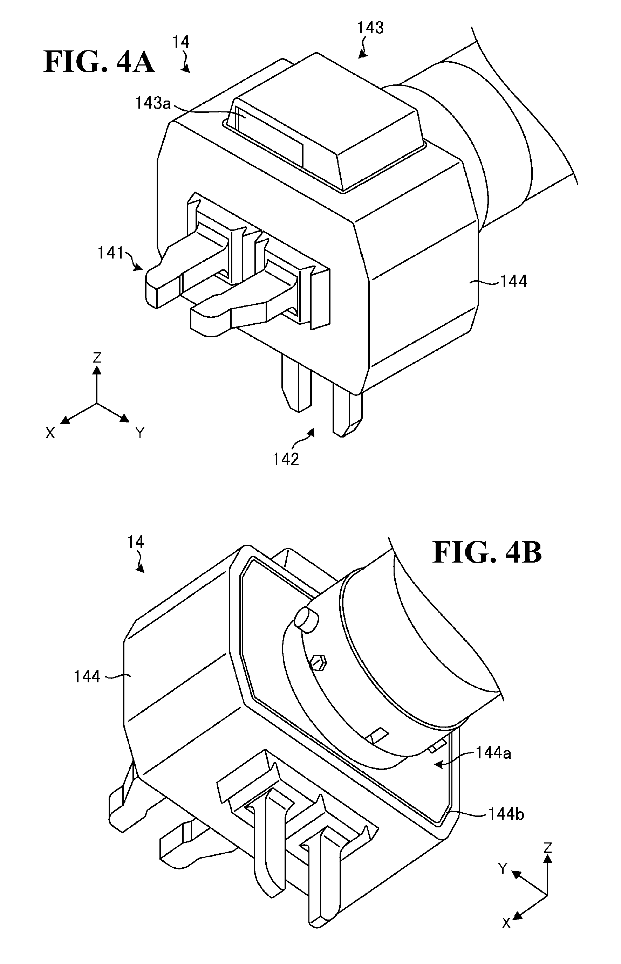

In view of this, in this embodiment, a covering is mounted to the hand 14 to cover at least a part of the hand 14 such as the slits 141b and the slits 142b. This will be described in detail below by referring to FIGs. 4A to 4D. It is noted that the "covering" will be referred to as "glove" below.

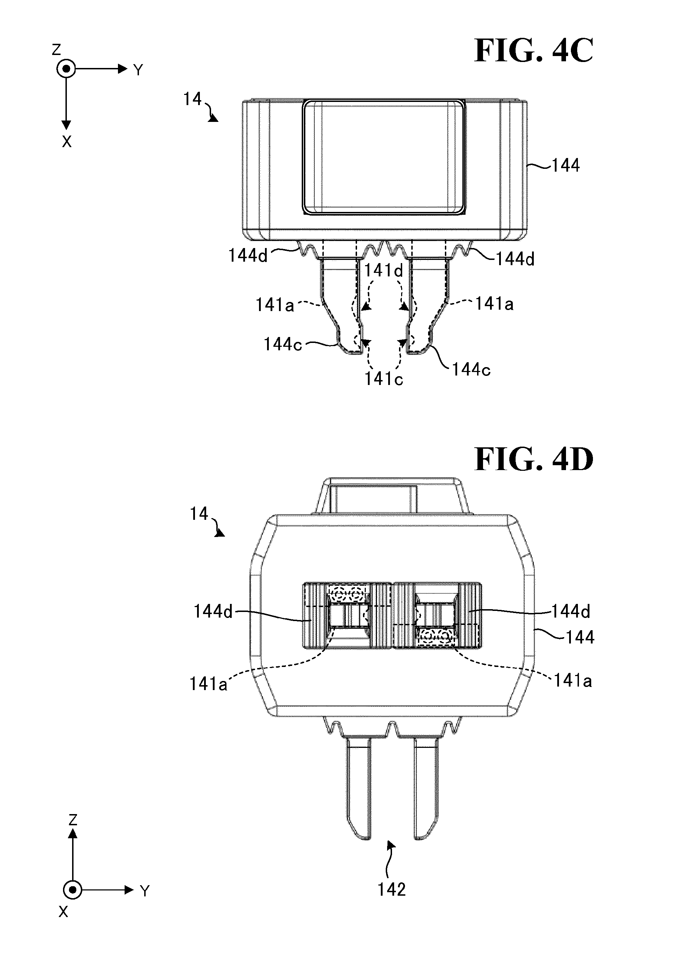

FIG. 4A is a schematic perspective view (Part 1) of the hand 14 with a glove 144 on. FIG. 4B is a schematic perspective view (Part 2) of the hand 14 with the glove 144 on. FIG. 4C is a schematic plan view of the hand 14 with the glove 144 on. FIG. 4D is a schematic front view of the hand 14 with the glove 144 on.

As shown in FIG. 4A, the hand 14 according to this embodiment further includes the glove 144 mounted to the hand 14 to cover at least a part of the hand 14. The glove 144 is made of a material having elasticity, examples including such elastic materials as rubber and chemical fiber. As shown in FIG. 4A, the glove 144 is mounted to the hand 14 in such an exemplary manner that the glove 144 covers the entire first holder 141 and second holder 142.

In order to avoid deterioration of the detection performance of the optical sensor 143, the glove 144 leaves the optical sensor 143 uncovered and exposed. While in the example shown in FIG. 4A the entire optical sensor 143 is exposed, it suffices that at least the light receiving-emitting device 143a is exposed.

As shown in FIG. 4B, the glove 144 includes an opening 144a. At least the opening 144a of the glove 144 is defined by the above-described elastic material. The glove 144 expands and contracts the opening 144a so as to be mounted to and removed from the hand 14.

The hand 14 includes a folded portion (also referred to as "clamp portion") 144b, which is formed by folding the edge of the opening 144a. The glove 144 is mounted to the hand 14 at the folded portion 144b. This is because the elastic force (spring coefficient) of the glove 144 increases at the folded portion 144, and the folded portion 144b causes a large friction force to act in opposition to the contracting force of the elastic material. This ensures that the glove 144 can be mounted to the hand 14 without any fixing member.

As shown in FIG. 4C, the glove 144 further includes contact portions 144c, which are in contact with and covers the hand 14, and room providing portions 144d, which cover the hand 14 with spatial room. The contact portions 144c cover at least distal end portions of the holding claws 141a.

The room providing portions 144d cover at least the base end portions of the holding claws 141a and the movable ranges (which are the above slits 141b) of the holding claws 141a.

Here, as shown in FIG. 4D, the room providing portions 144d are formed in a corrugated shape. This ensures no or minimized restriction on the opening and closing operation of the holding claws 141a even though the hand 14 is wearing the glove 144. It is noted that the above-specified shape of the room providing portions 144d should not be construed in a limiting sense; a bellows shape, for example, is also possible insofar as the holding claws 141a are able to make their opening and closing operation without being restricted.

The contact portions 144c are in contact with and cover the distal end portions of the holding claws 141a, and thus are unlikely to adversely affect the holding operation of the holding claws 141a. That is, even though the hand 14 is wearing the glove 144, the holding claws 141a are able to hold a to-be-held object with no or minimized difficulty.

Thus, the glove 144 covers the base end portions of the holding claws 141a and the movable ranges of the holding claws 141a with no or minimized difficulty to the holding operation of the holding claws 141a. This eliminates or minimizes leakage of dust in the hand 14 to the outside.

This also eliminates or minimizes intrusion of external dust and droplets into the hand 14. That is, cleanliness performance and dust-proof and drip-proof performance are realized at the same time.

The above description has mainly exemplified the portion of the glove 144 that covers the first holder 141. The description regarding the first holder 141 also applies to the second holder 142, and hence description regarding the second holder 142 will be omitted.

Description regarding FIG. 4C will be provided again. As shown in FIG. 4C, each of the holding claws 141a has a complicated shape with the first notch 141c and the second notch 141d. It is preferable that the parts of the holding claw 141a corresponding to the first notch 141c and the second notch 141d are at least made of an elastic material, for example.

With the elastic material, while the hand 14 is not holding any to-be-held object, tension acts on the parts of the holding claw 141a corresponding to the first notch 141c and the second notch 141d, and this makes the above-described complex shape smooth. This provides such an advantageous effect that the hand 14 is easy to wash thoroughly with the glove 144 on.

It is also possible to remove the glove 144 and replace the glove 144 with a glove 144 on a work unit basis or on a time unit basis. This keeps the hand 14 clean without washing operation of the hand 14. Additionally, replacing the glove 14 with a new glove 14 reduces possible inconveniences caused by poor washing.

While the hand 14 is holding the to-be-held object, the parts of the hand 14 corresponding to the first notch 141c and the second notch 141d deform to agree with the shape of the to-be-held object. This provides the advantageous effect of reliably holding the to-be-held object.

The contact portions 144c, which correspond to the distal end portions and other portions of the holding claws 141a, are in contact with the hand 14 and thus are believed to undergo a larger level of stress than the room providing portions 144d do.

In view of this, it is possible to reinforce the contact portions 144c by making the contact portions 144c thicker than the room providing portions 144d. There is no particular limitation to the method of making the contact portions 144c thicker. For example, the material of the glove 144 may have a multilayer configuration at the contact portions 144c, or it is possible to use a reinforcing member such as chemical fiber.

Additionally, the biomedical field often involves treatment of chemical substances, and in view of this, it is more preferred to select the material for the glove 144 while considering a chemical-resistant property and similar properties.

Additionally, the production of the robot 10 includes a covering step in which at least a part of the hand 14 is covered by the glove 144.

As has been described hereinbefore, the robot according to this embodiment includes the hand (robot hand) and the glove (covering). The hand is disposed on the arm (robot arm). The glove is mounted to cover at least a part of the hand.

Thus, the robot, the method for producing the robot, and the covering according to this embodiment realize cleanliness performance and dust-proof and drip-proof performance at the same time.

While in the above-described embodiment the robot has been described as a two-arm robot with seven-axis arm, this should not be construed in a limiting sense. That is, insofar as the hand is provided on the arm, there is no other limitation to the number of arms of the robot and the number of axes.

While in the above-described embodiment a pair of holding claws have been described as one set of holding claws, one set of holding claws will not be limited to a pair of holding claws; one set of holding claws may be made up of three or more holding claws. Thus, the holding claws will not be limited to the parallely openable-closable type. Another example is that the hand is provided with three holding claws that are slidable along three radial slits in a direction in which the three holding claws approach each other or in a direction in which the three holding claws move apart from each other.

While in the above-described embodiment rubber and chemical fiber have been exemplified as the elastic material, there is no limitation to the type of the material insofar as the elastic material elasticity that makes the material mountable to and removable from the hand. Examples include latex and polyurethane fiber. It is also possible to use an elastic high-conductivity film or a similar material such as rubbers referred to as "elastic conductors", which recently have been under development for application to electronic skin.

It is also possible to combine the above-described embodiment with a method of adjusting air pressure in the hand. An example is to set the air pressure in the hand into a suitable level of negative pressure with the glove over the hand so as to cause the glove to be sucked onto the hand. This ensures that the glove is more reliably mounted to the hand. This is effective, for example, when there is a possibility of degradation in elasticity of the elastic material.

Contrarily, it is possible to set the air pressure in the hand into a suitable level of positive pressure with the glove over the hand so as to provide the glove with an appropriate cushioning property. This is effective, for example, when the hand holds a fragile to-be-held object while protecting the to-be-held object.

While in the above-described embodiment the robot has been described as performing specimen processing in the biomedical field, this should not be construed as limiting the processing of the robot or as limiting the field .

Obviously, numerous modifications and variations of the present disclosure are possible in light of the above teachings. It is therefore to be understood that within the scope of the appended claims, the present disclosure may be practiced otherwise than as specifically described herein.
- 1: Robot system
- 2: Safety cabinet
- 10: Robot
- 11: Base
- 12: Body
- 13L: Left arm
- 13R: Right arm
- 14: Hand
- 14L: Left hand
- 14R: Right hand
- 20: Work table
- 30: Processing equipment
- 31: Dish
- 32: Test tube
- 33: Spatula
- 34: Pipette
- 35: Spoon
- 36: Agitator
- 37: Centrifuge
- 40: Control device
- 141: First holder
- 141a: Holding claw
- 141b: Slit
- 141c: First notch
- 141d: Second notch
- 142: Second holder
- 142a: Holding claw
- 142b: Slit
- 143: Optical sensor
- 143a: Light receiving-emitting device
- 144: Glove
- 144a: Opening
- 144b: Folded portion
- 144c: Contact portion
- 144d: Room providing portion
- B: Axis
- E: Axis
- L: Axis
- R: Axis
- S: Axis
- SW: Axis
- T: Axis
- U: Axis

## Claims

1. A robot (10), **characterized by**:
a robot arm (13R, 13L);
a robot hand (14) disposed on the robot arm (13R, 13L); and
a covering (144) to cover at least a part of the robot hand (14).

2. The robot (10) according to claim 1, wherein the covering (144) comprises
an opening (144a) defined by an elastic material having elasticity, and
a folded portion (144b) formed by folding an edge of the opening (144a).

3. The robot (10) according to claim 2, wherein the covering (144) is mounted to the robot hand (14) at the folded portion (144b).

4. The robot (10) according to claim 2 or 3, wherein the covering (144) is configured to expand and contract the elastic material so as to be mounted to and removed from the robot hand (14).

5. The robot (10) according to any one of claims 1 to 4,
wherein the robot hand (14) comprises at least one pair of holding claws (141a, 142a) slidable in a direction in which the pair of holding claws (141a, 142a) approach each other or in a direction in which the pair of holding claws (141a, 142a) move apart from each other, and
wherein the covering (144) comprises
contact portions (144c) contacting and covering distal end portions of the holding claws (141a, 142a), and
room providing portions (144d) covering base end portions of the holding claws (141a, 142a) and movable ranges of the holding claws (141a, 142a) with spatial room.

6. The robot (10) according to claim 5, wherein the at least one pair of holding claws (141a, 142a) comprise a plurality of pairs of holding claws (141a, 142a), and one pair of holding claws (141a, 142a) among the plurality of pairs of holding claws (141a, 142a) comprise distal end portions oriented in a direction different from a direction in which distal end portions of another pair of holding claws (141a, 142a) among the plurality of pairs of holding claws (141a, 142a) are oriented.

7. The robot (10) according to claim 5 or 6, wherein the contact portions (144c) each comprise a thickness greater than thicknesses of the room providing portions (144d).

8. The robot (10) according to any one of claims 5 to 7, wherein the contact portions (144c) are reinforced with a reinforcing material.

9. The robot (10) according to any one of claims 5 to 8, wherein the room providing portions (144d) each comprise a corrugated shape.

10. A method for producing a robot (10), **characterized by**:
covering at least a part of a robot hand (14) using a covering (144), the robot hand (14) being to be disposed on a robot arm (13R, 13L).

11. A covering (144), **characterized by**:
an opening (144a) comprising an elastic material having elasticity; and
a folded portion (144b) formed by folding an edge of the opening (144a),
wherein the covering (144) is to cover a robot hand (14) and is to be mounted to the robot hand (14) at the folded portion (144b).
